# EUROPEAN PATENT SPECIFICATION

(11) **EP 2 645 793 B1**
(45) Date of publication and mention of the grant of the patent: **29.03.2017**
(21) Application number: 13172303.3
(22) Date of filing: 15.04.2010
(51) Int. Cl.: H04W 76/02

(54) **Radio link failure processing method and base station**
Verarbeitungsverfahren von Funkverbindungsfehlern und Basisstation
Procédé de traitement de défaillance de liaison radio et station de base

(30) Priority: 22.04.2009 WO PCT/CN2009/071411; 23.06.2009 CN 200910152301
(43) Date of publication of application: 02.10.2013
(62) Divisional of application: 10766612.5
(73) Proprietor: Huawei Technologies Co., Ltd., Longgang District Shenzhen, Guangdong 518129 (CN)
(72) Inventor: Chen, Dong, 518129 Shenzhen (CN); Ma, Jie, 518129 Shenzhen (CN); Wang, Shukun, 518129 Shenzhen (CN)
(74) Representative: Kreuz, Georg Maria

(56) References cited:
- WO-A2-2007/130324
- CN-A- 1 722 895
- LG ELECTRONICS: "Radio Link Failure for HS-DSCH", 3GPP DRAFT; R3-041171_(REL6 NBAP HS-DSCH_RL_FAILURE_CR1016R1), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Prague, Czech Republic; 20040823, 23 August 2004 (2004-08-23), XP050156915,

## Description

### TECHNICAL FIELD

The present invention relates to the communication field, and in particular, to a method, an apparatus, and a system for processing radio link failure.

### BACKGROUND

Radio link failure (Radio Link Failure, RLF) is categorized into uplink RLF and downlink RLF. Uplink RLF is detected by a NodeB (NodeB), and downlink RLF is detected by a user equipment (User Equipment, UE).

In a multi-carrier system, a UE detects only downlink RLF that occurs on a primary carrier (a carrier specified by a network among all carriers used by the UE). When detecting that downlink RLF occurs on the primary carrier, the UE removes the downlink radio links of all carriers (including the primary carrier and secondary carriers), changes a state to the CELL-FACH (CELL-FACH) state of a cell where the UE camps on, and sends a message to the network through a common control channel (CCCH), instructing the network to perform call drop processing. Similarly, the NodeB detects only uplink RLF that occurs on the primary carrier. When detecting that uplink RLF occurs on the primary carrier, the NodeB sends a RADIO LINK FAILURE INDICATION (RADIO LINK FAILURE INDICATION) message to a radio network controller (Radio Network Controller, RNC), instructing the RNC to perform call drop processing.

The prior art considers RLF on the primary carrier only. Therefore, the probability of communication interruption of a user is high and the communication experience of the user is deteriorated.

R2-084402 discloses when RLF occurs on an anchor carrier, a UE select a suitable cell from an anchor carrier cell and a supplementary carrier cell.

Document CN1722895A discloses a method of reshuffling the master carrier frequency in multiply carrier wave area, which comprises the following steps: a) In case that the node B detects that the channel charging the master frequency is out of work, sending the notice to the radio network controller; and b) starting the master carrier frequency reshuffling procedure if the radio network controller decides that the master carrier frequency reshuffling procedure shall be started. Then the base station realizes the master and stand-by carrier frequency reshuffling. By said method, the mobile terminal can get system information and other allocation information if the master carrier frequency is out of work in the TD-SCDMA agreement standard.

Document WO2007/130324A2 discloses a method and apparatus for detecting a radio link (RL) failure for uplink and downlink in a long term evolution wireless communication system including at least one wireless transmit/receive unit and at least one evolved Node-B. A determination is made as to whether an RL has an in-synchronization status or an out-of-synchronization status. An RL failure is declared if an out-of-synchronization status is detected.

### SUMMARY OF THE INVENTION

Embodiments of the present invention provide a method, an apparatus, and a system for processing RLF to reduce the communication interruption rate of communication of a user. Embodiments of the present invention are disclosed in the claims.

A method for processing RLF includes, when a user equipment communicates with a network through two or more carriers, if downlink RLF occurs on at least one of the two or more carriers, determining whether there is a carrier on which no downlink RLF occurs, among the two or more carriers, and sending a message to the network through a dedicated control channel of the carrier on which no downlink RLF occurs if there is a carrier on which no downlink RLF occurs, wherein the message carries information of at least one of a carrier and a cell on which RLF occurs and instructs the network to perform RLF processing for the carrier on which the downlink RLF occurs, or stopping sending information on an uplink dedicated physical control channel of the carrier on which the downlink RLF occurs.

A method for processing RLF includes, when a user equipment communicates with a network through two or more carriers, obtaining information about a carrier on which downlink RLF occurs, among the two or more carriers, performing RLF processing for the carrier on which the downlink RLF occurs according to the carrier information, and keeping communicating by using a carrier on which no downlink RLF occurs.

A UE includes a determining unit configured to, when the UE communicates with a network through two or more carriers, if downlink radio link failure occurs on at least one of the two or more carriers, determine whether there is a carrier on which no downlink RLF occurs, among the two or more carriers, and a processing unit configured to, if the determining unit determines that there is a carrier on which no downlink RLF occurs among the two or more carriers, send a message to the network through a dedicated control channel of the carrier on which no downlink RLF occurs, wherein the message carries information of at least one of a carrier and a cell on which RLF occurs and instructs the network to perform RLF processing for the carrier on which the downlink RLF occurs, or stop sending information on an uplink dedicated physical control channel (DPCCH) of the carrier on which the downlink RLF occurs.

An apparatus for processing RLF includes an obtaining unit configured to, when a user equipment communicates with a network through two or more carriers, obtain information about a carrier on which downlink RLF occurs among the two or more carriers, and a processing unit configured to perform RLF processing for the carrier on which the downlink RLF occurs according to the carrier information obtained by the obtaining unit, and keep communicating by using a carrier on which no downlink RLF occurs among the two or more carriers.

With the foregoing RLF processing method and apparatus, when downlink RLF occurs on at least one carrier among all carriers used by the UE and there is a carrier on which no downlink RLF occurs among all the carriers, the UE may send a message to the network through the DCCH of the carrier on which no downlink RLF occurs, where the message carries information about a carrier and/or cell on which the RLF occurs, or stop sending information on the uplink DPCCH of the carrier on which the RLF occurs. Therefore, the network considers that uplink RLF occurs, and performs RLF processing for the carrier on which the downlink RLF occurs. When the network performs RLF processing for the carrier on which the RLF occurs, the UE may keep communicating with the network through the carrier on which no RLF occurs and obtain services from the network. The technical solution provided in the embodiments of the present invention reduces the communication interruption rate of the user and improves the communication experience of the user. The technical solution solves the problem in the prior art that only the RLF of the primary carrier is considered and when downlink RLF occurs on the primary carrier of the UE, the UE removes the downlink radio links of all carriers, resulting in a high communication interruption rate and poor user experience.

Embodiments of the present invention provide a method, an apparatus, and a system for processing RLF to reduce the communication interruption rate of a user.

Embodiments of the present invention provide the following technical solution.

A method for processing RLF includes, when a user equipment communicates with a network through two or more carriers, if uplink RLF occurs on at least one of the two or more carriers, sending a message to a radio network controller, wherein the message carries information of at least one of the carrier and a cell on which RLF occurs and instructs the RNC to perform uplink RLF processing for the carrier on which the uplink RLF occurs, and/or if there is a carrier on which no uplink RLF occurs among the two or more carriers, stopping sending information on a downlink dedicated physical channel of the carrier on which the uplink RLF occurs, and keeping communicating by using the carrier on which no uplink RLF occurs.

A method for processing RLF includes, when a UE communicates with a network through two or more carriers, obtaining information about a carrier on which uplink RLF occurs among the two or more carriers, and performing uplink RLF processing for the carrier on which uplink RLF occurs according to the carrier information.

A NodeB includes a sending unit configured to, when a user equipment communicates with a network through two or more carriers, if uplink radio link failure occurs on at least one of the two or more carriers, send a message to a radio network controller, wherein the message carries information of at least one of a carrier and a cell on which RLF occurs and instructs the RNC to perform uplink RLF processing for the carrier on which the uplink RLF occurs, and/or a processing unit configured to, when the UE communicates with the network through the two or more carriers, if the uplink RLF occurs on at least one of the two or more carriers and there is a carrier on which no uplink RLF occurs among the two or more carriers, stop sending information on a downlink dedicated physical channel of the carrier on which uplink RLF occurs.

An RNC includes an obtaining unit configured to, when a user equipment communicates with a network through two or more carriers, obtain information about a carrier on which uplink radio link failure occurs, among the two or more carriers, and a processing unit configured to perform uplink RLF processing for the carrier on which uplink RLF occurs according to the carrier information obtained by the obtaining unit.

A system for processing RLF includes a NodeB and a radio network controller, wherein the NodeB is configured to, when a user equipment communicates with a network through two or more carriers, if uplink RLF occurs on at least one of the two or more carriers, send a message to the RNC, wherein the message carries information of at least one of the carrier and a cell on which RLF occurs, and/or when there is a carrier on which no uplink RLF occurs among the two or more carriers, stop sending information on a downlink dedicated physical channel of the carrier on which uplink RLF occurs. The RNC is configured to receive the message carrying the information of the at least one of the carrier and cell on which RLF occurs sent by the NodeB, and obtain information about the carrier on which the uplink RLF occurs from the message, or detect downlink DPCHs of the two or more carriers, obtain information about the carrier on which the uplink RLF occurs according to a detection result, and perform uplink RLF processing for the carrier on which the uplink RLF occurs according to the obtained carrier information.

With the foregoing RLF processing method, apparatus, and system, the RNC may perform RLF processing for only the carrier on which uplink RLF occurs; therefore, when the carriers used by the UE include a carrier on which no uplink RLF occurs, the UE can communicate with the network normally through the carrier on which no RLF occurs. Thereby, the communication interruption rate of the user is reduced, and the communication experience of the user is improved. The technical solution solves the problem in the prior art that only the RLF of the primary carrier is considered and when uplink RLF occurs on the primary carrier of the UE, the UE removes the downlink radio links of all carriers, resulting in a high communication interruption rate and poor user experience. According to the technical solution provided in the embodiments of the present invention, when there is not a carrier on which no uplink RLF occurs, the NodeB can stop sending information on the downlink DPCH of the carrier on which uplink RLF occurs, without notifying the RNC to perform uplink RLF processing for the carrier on which the RLF occurs, therefore saving network resources.

### BRIEF DESCRIPTION OF THE DRAWINGS

To better explain the technical solution of the present invention, the accompanying drawings required in the description of the embodiments of the present invention are described below. It is apparent that the accompanying drawings illustrate only some exemplary embodiments of the present invention. Those skilled in the art can derive other drawings from these drawings without any creative effort.
FIG. 1 is a flowchart of a method for processing RLF provided in a first embodiment of the present invention;
FIG. 2 is a flowchart of a method for processing RLF provided in a second embodiment of the present invention;
FIG. 3 is a flowchart of a method for processing RLF provided in a third embodiment of the present invention;
FIG. 4 shows a structure of a UE provided in a fourth embodiment of the present invention;
FIG. 5 shows a first structure of an apparatus for processing RLF provided in a fifth embodiment of the present invention;
FIG. 6 shows a structure of an obtaining unit in the apparatus for processing RLF provided in the fifth embodiment of the present invention;
FIG. 7 shows a second structure of the apparatus for processing RLF provided in the fifth embodiment of the present invention;
FIG. 8 is a flowchart of a method for processing RLF provided in a seventh embodiment of the present invention;
FIG. 9 is a flowchart of a method for processing RLF provided in an eighth embodiment of the present invention;
FIG. 10 shows a first structure of a NodeB provided in a ninth embodiment of the present invention;
FIG. 11 shows a second structure of the NodeB provided in the ninth embodiment of the present invention;
FIG. 12 shows a first structure of an RNC provided in a tenth embodiment of the present invention;
FIG. 13 shows a structure of an obtaining unit in the RNC provided in the tenth embodiment of the present invention;
FIG. 14 shows a second structure of the RNC provided in the tenth embodiment of the present invention;
FIG. 15 shows a structure of a system for processing RLF provided in an eleventh embodiment of the present invention; and
FIG. 16 is a flowchart of a method for processing RLF provided in a twelfth embodiment of the present invention.

### DETAILED DESCRIPTION OF ILLUSTRATIVE EMBODIMENTS

The technical solution of the present invention is hereinafter described in detail with reference to the accompanying drawings. The embodiments are only exemplary embodiments of the present invention and the present invention is not limited to such embodiments. All other embodiments, which can be derived by those skilled in the art from the embodiments provided herein without any creative effort, shall fall within the protection scope of the present invention.

To make the merits of the technical solution of the present invention clearer, the following describes the embodiments of the present invention in more detail with reference to the accompanying drawings.

The following embodiments take the processing of downlink RLF as an example to describe how to process RLF.

### Embodiment 1

This embodiment provides a method for processing RLF to reduce the communication interruption rate of a user.

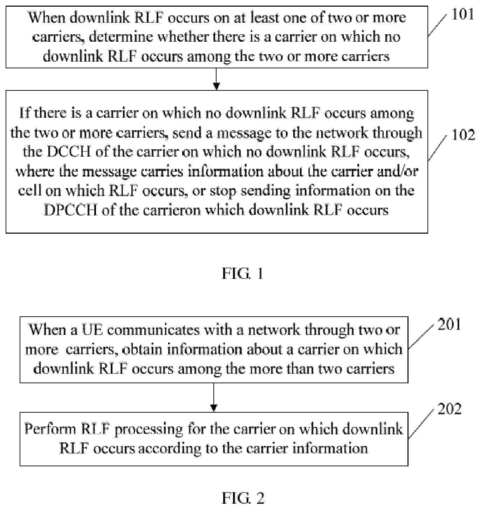

As shown in FIG. 1, the method for processing RLF includes the following steps.

101. When a UE communicates with a network through two or more carriers, if downlink RLF occurs on at least one of the two or more carriers, determine whether there is a carrier on which no downlink RLF occurs, among the two or more carriers.

102. If there is a carrier on which no downlink RLF occurs, send a message to the network through a dedicated control channel (DCCH) of the carrier on which no downlink RLF occurs, where the message carries information about the carrier and/or a cell on which the RLF occurs and instructs the network to perform RLF processing for the carrier on which the downlink RLF occurs, or stop sending information on an uplink dedicated physical control channel (DPCCH) of the carrier on which the downlink RLF occurs.

With the foregoing RLF processing method, when downlink RLF occurs on at least one carrier among the carriers used by the UE and there is at least one carrier on which no downlink RLF occurs, the UE may send a message to the network, where the message carries information about the carrier and/or cell on which the RLF occurs, or stop sending information on the uplink DPCCH of the carrier on which the downlink RLF occurs. Therefore, the network considers that uplink RLF occurs, and performs downlink RLF processing for the carrier on which the downlink RLF occurs. When the network performs downlink RLF processing for the carrier on which the downlink RLF occurs, the UE may communicate with the network through the carrier on which no downlink RLF occurs. Thereby, the communication interruption rate of the user is reduced, and the communication experience of the user is improved. In contrast, when downlink RLF occurs on the primary carrier of the UE in the prior art, the downlink communication between the UE and the network is interrupted, resulting in a high communication interruption rate and a poor user experience.

### Embodiment 2

This embodiment provides a method for processing RLF to reduce the communication interruption rate of a user.

As shown in FIG. 2, the method for processing RLF includes the following steps.

201. When a UE communicates with a network through two or more carriers, obtain information about a carrier where downlink RLF occurs among the two or more carriers.

202. Perform RLF processing for the carrier on which the downlink RLF occurs according to the carrier information.

With the foregoing RLF processing method, RLF processing can be performed for a carrier on which the downlink RLF occurs, and the UE can communicate with the network normally by using a carrier on which no downlink RLF occurs. Thereby, the communication interruption rate of the user is reduced, and the communication experience of the user is improved. In contrast, when downlink RLF occurs on the primary carrier of the UE in the prior art, the downlink communication between the UE and the network is interrupted, resulting in a high communication interruption rate and a poor user experience.

### Embodiment 3

This embodiment provides a method for processing RLF to reduce the communication interruption rate of a user.

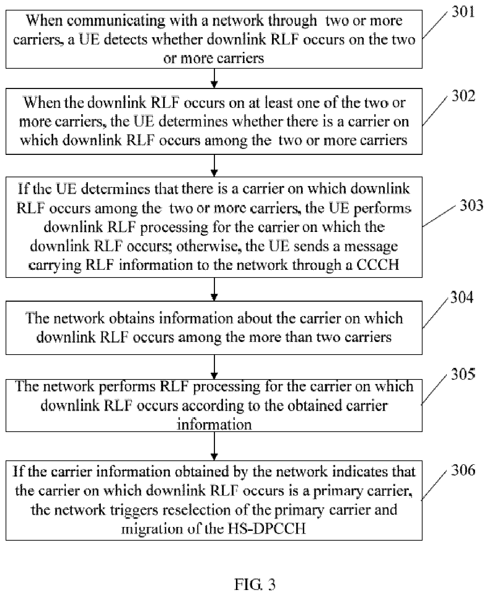

As shown in FIG. 3, the method for processing RLF includes the following steps.

301. When communicating with a network through two or more carriers, a UE detects whether downlink RLF occurs on the two or more carriers.

In this embodiment, the physical layer of the UE may detect whether downlink RLF occurs on the two or more carriers by detecting a downlink dedicated physical channel (DPCH) or fractional dedicated physical channel (F-DPCH) of the carriers. Specifically, the UE receives information from the downlink DPCH/F-DPCH of each carrier; if the UE successively receives N313 pieces of failure indications from the downlink DPCH/F-DPCH of a carrier, the UE determines that the downlink RLF occurs on the carrier; if the UE does not receive N313 pieces of failure indications from the downlink DPCH/F-DPCH of the carrier, the UE determines that the downlink RLF does not occur on the carrier.

302. When downlink RLF occurs on at least one of the two or more carriers, the UE determines whether there is a carrier on which no downlink RLF occurs among the two or more carriers.

In this embodiment, the UE may determine whether there is a carrier on which no downlink RLF occurs among the two or more carriers according to the results of downlink RLF detection of the two or more carriers in step 301.

Optionally, the two or more carriers include one primary carrier and one or more secondary carrier. If the UE determines that the carrier on which the downlink RLF occurs in step 301 is the primary carrier, the UE determines that there is not a carrier on which no downlink RLF occurs among the two or more carriers in step 302. If the UE determines that the carrier on which the downlink RLF occurs in step 301 is a secondary carrier, the UE determines that there is a carrier on which no downlink RLF occurs among the two or more carriers in step 302.

In practice, the UE may determine whether there is a carrier on which no downlink RLF occurs among the two or more carriers in other ways, which are not described here.

303. If the UE determines that there is a carrier on which no downlink RLF occurs among the two or more carriers in step 302, the UE performs downlink RLF processing for the carrier on which the downlink RLF occurs; if the UE determines that there is not a carrier on which no downlink RLF occurs among the two or more carriers in step 302, the UE sends a message carrying RLF information to the network through a CCCH.

The message carrying RLF information may be a cell update (Cell Update) message.

The UE may perform downlink RLF processing for the carrier on which the downlink RLF occurs in the following ways.
1. The UE sends a message to the network through the DCCH of the carrier on which no downlink RLF occurs, where the message carries information about the carrier and/or a cell on which the RLF occurs.
   In this embodiment, the message carrying information about the carrier and/or the cell on which the RLF occurs may be a cell update (Cell Update) message, or a measurement report (Measurement Report) message, and so on.
   Optionally, if the two or more carriers include two or more carriers on which no downlink RLF occurs, the UE may randomly select one of the carrier on which no downlink RLF occurs and send a message carrying information about the carrier and/or cell on which the RLF occurs to the network through the DCCH of the carrier on which no downlink RLF occurs; or, if the two or more carrier on which no downlink RLF occurs includes the primary carrier, the UE may send a message carrying information about the carrier and/or cell on which the RLF occurs to the network through the DCCH of the primary carrier; or, the UE may send a message carrying information about the carrier and/or cell on which the RLF occurs to the network through the DCCHs of the two or more carrier on which no downlink RLF occurs jointly.
2. The UE considers that the carrier on which the downlink RLF occurs is deactivated, and therefore does not send a message to the network. Meanwhile, the UE stops sending information on the uplink dedicated physical control channel (DPCCH) of the carrier on which the downlink RLF occurs.

In practice, the UE may perform downlink RLF processing for the carrier on which the downlink RLF occurs in other ways, which are not described here.

304. The network obtains information about the carrier on which the downlink RLF occurs among the two or more carriers.

If the UE sends a message carrying RLF information to the network through the CCCH in step 303, the network may receive the message carrying RLF information and obtain information about the carrier on which the downlink RLF occurs. In this case, downlink RLF occurs on all carriers of the UE.

If the UE sends a message carrying information about the carrier and/or cell on which the RLF occurs to the network through the DCCH of a carrier on which no downlink RLF occurs in step 303, the network may receive the message carrying information about the carrier and/or cell on which the RLF occurs and obtain information about the carrier which the downlink RLF occurs from the message.

If the UE does not send a message to the network, and stops sending information on the uplink DPCCH of the carrier on which the downlink RLF occurs in step 303, the network may detect the uplink DPCCHs of the two or more carriers used by the UE and obtain information about the carrier on which the downlink RLF occurs according to the detection result. Specifically, within the preset detection time, if the network does not detect data transmitted on the uplink DPCCH, the network knows that the carrier corresponding to the uplink DPCCH is a carrier on which the downlink RLF occurs.

305. The network performs RLF processing for the carrier on which the downlink RLF occurs according to the carrier information obtained in step 304.

Specifically, if the obtained carrier information indicates that downlink RLF occurs on all carriers of the UE, the network performs call drop processing according to an RRM algorithm, such as reestablishing a RRC connection; otherwise, the network removes the downlink radio link of the carrier on which the downlink RLF occurs and updates the active set, or ignores the carrier on which the downlink RLF occurs.

Optionally, the method for processing RLF may include the following step.

306. If the carrier information obtained by the network in step 304 indicates that the carrier on which the downlink RLF occurs is the primary carrier, the network triggers reselection of the primary carrier and migration of the high speed dedicated physical control channel (HS-DPCCH).

With the foregoing RLF processing method, when downlink RLF occurs on at least one carrier among the carriers used by the UE and there is a carrier on which no downlink RLF occurs among the carriers, the UE may send a message to the network through the DCCH of the carrier on which no downlink RLF occurs, where the message carries information about the carrier and/or cell on which the RLF occurs, or stop sending information on the uplink DPCCH of the carrier on which the downlink RLF occurs. Therefore, the network considers that uplink RLF occurs, and performs downlink RLF processing for the carrier on which the downlink RLF occurs. When the network performs downlink RLF processing for the carrier on which the downlink RLF occurs, the UE may communicate with the network through the carrier on which no downlink RLF occurs. Thereby, the communication interruption rate of the user is reduced, and the communication experience of the user is improved. In contrast, when downlink RLF occurs on the primary carrier of the UE in the prior art, the downlink communication between the UE and the network is interrupted, resulting in a high communication interruption rate and a poor user experience.

### Embodiment 4

This embodiment provides a UE to reduce the communication interruption rate of a user.

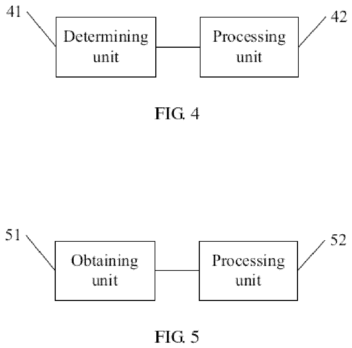

As shown in FIG. 4, the UE includes a determining unit 41 that is configured to, when the UE communicates with a network through two or more carriers, if downlink RLF occurs on at least one of the two or more carriers, determine whether there is a carrier on which no downlink RLF occurs among the two or more carriers. A processing unit 42 is configured to, if the determining unit 41 determines that there is a carrier on which no downlink RLF occurs among the two or more carriers, send a message to the network through a DCCH of the carrier on which no downlink RLF occurs, where the message carries information about the carrier and/or a cell on which the RLF occurs and instructs the network to perform RLF processing for the carrier on which the downlink RLF occurs, or stop sending information on an uplink DPCCH of the carrier on which the downlink RLF occurs.

Further, if the determining unit 41 determines that there is not a carrier on which no downlink RLF occurs among the two or more carriers, the processing unit 42 may be configured to send a message carrying RLF information to the network through a CCCH, where the message instructs the network to perform call drop processing for the UE.

For the specific implementation of the UE provided in this embodiment, refer to the method for processing RLF provided in the third embodiment.

In this embodiment, when downlink RLF occurs on at least one carrier among all carriers used by the UE and there is a carrier on which no downlink RLF occurs among the carriers, the UE may send a message to the network through the DCCH of the carrier on which no downlink RLF occurs, where the message carries information about the carrier and/or cell on which the RLF occurs, or stop sending information on the uplink DPCCH of the carrier on which the downlink RLF occurs. Therefore, the network considers that uplink RLF occurs, and performs downlink RLF processing for the carrier on which the downlink RLF occurs. When the network performs downlink RLF processing for the carrier on which the downlink RLF occurs, the UE may communicate with the network normally through the carrier on which no downlink RLF occurs. Thereby, the communication interruption rate of the user is reduced, and the communication experience of the user is improved. The technical solution solves the problem in the prior art that only the RLF of the primary carrier is considered and when downlink RLF occurs on the primary carrier of the UE, the UE removes the downlink radio links of all carriers, resulting in a high communication interruption rate and poor user experience.

### Embodiment 5

This embodiment provides an apparatus for processing RLF to reduce the communication interruption rate of a user.

As shown in FIG. 5, the apparatus for processing RLF includes an obtaining unit 51 that is configured to, when a UE communicates with a network through two or more carriers, obtain information about a carrier where downlink RLF occurs among the two or more carriers. A processing unit 52 is configured to perform RLF processing for the carrier on which the downlink RLF occurs according to the carrier information obtained by the obtaining unit 51, and keep communicating by using a carrier on which no downlink RLF occurs among the two or more carriers.

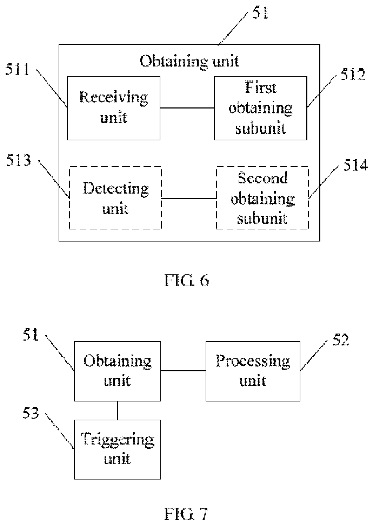

Further, as shown in FIG. 6, the obtaining unit 51 may include a receiving unit 511 that is configured to receive a message sent by the UE, where the message carries information about the carrier and/or cell on which the RLF occurs or carries downlink RLF information. A first obtaining subunit 512 is configured to obtain information about the carrier on which the downlink RLF occurs from the message received by the receiving unit 511, where the message carries information about the carrier and/or cell on which the RLF occurs or carries downlink RLF information. Alternatively, or in addition, A detecting unit 513 can be configured to detect the uplink DPCCHs of the two or more carriers, and a second obtaining subunit 514 can be configured to obtain information about the carrier on which the downlink RLF occurs according to the detection result of the detecting unit 513.

Further, as shown in FIG. 7, the apparatus for processing RLF may include a triggering unit 53 that is configured to trigger reselection of the primary carrier and migration of the HS-DPCCH when the carrier on which the downlink RLF occurs is the primary carrier.

For the specific implementation of the apparatus for processing RLF provided in this embodiment, refer to the method for processing RLF provided in the third embodiment.

With the foregoing RLF processing apparatus, RLF processing can be performed for a carrier on which the downlink RLF occurs, and the UE can communicate with the network normally by using a carrier on which no downlink RLF occurs. Thereby, the communication interruption rate of the user is reduced, and the communication experience of the user is improved. The technical solution solves the problem in the prior art that only the RLF of the primary carrier is considered and when downlink RLF occurs on the primary carrier of the UE, the UE removes the downlink radio links of all carriers, resulting in a high communication interruption rate and poor user experience.

The following embodiments deal with the processing of uplink RLF.

### Embodiment 6

This embodiment provides a method for processing RLF to reduce the communication interruption rate of a user.

The method for processing RLF includes, when a UE communicates with a network through two or more carriers, if uplink RLF occurs on at least one of the two or more carriers, sending a message to an RNC, where the message carries information about the carrier and/or a cell on which RLF occurs and instructs the RNC to perform uplink RLF processing for the carrier on which the uplink RLF occurs, and/or if there is a carrier on which no uplink RLF occurs among the two or more carriers, stopping sending information on a downlink DPCH/F-DPCH of the carrier on which the uplink RLF occurs.

With the foregoing RLF processing method, when uplink RLF occurs on a carrier used by the UE, the UE may send a message to the RNC, where the message carries information about the carrier and/or cell on which RLF occurs, so that the RNC may perform uplink RLF processing for only the carrier on which uplink RLF occurs; when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, when uplink RLF occurs on the primary carrier of the UE in the prior art, the communication of the user is interrupted, resulting in a high communication interruption rate and a poor user experience. According to the technical solution provided in this embodiment, when there is a carrier on which no uplink RLF occurs, a NodeB can stop sending information on the downlink DPCH/F-DPCH of the carrier on which uplink RLF occurs, without notifying the RNC to perform uplink RLF processing for the carrier on which the uplink RLF occurs, therefore saving network resources.

### Embodiment 7

This embodiment provides a method for processing RLF to reduce the communication interruption rate of a user.

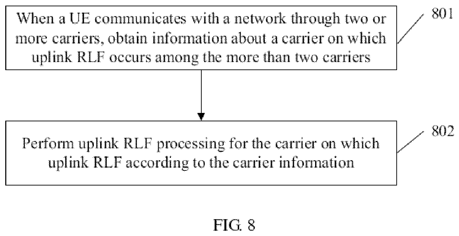

As shown in FIG. 8, the method for processing RLF includes the following steps.

801. When a UE communicates with a network through two or more carriers, obtain information about a carrier where uplink RLF occurs among the two or more carriers.

802. Perform uplink RLF processing for the carrier on which uplink RLF occurs according to the carrier information.

With the foregoing RLF processing method, RLF processing is performed for only the carrier on which uplink RLF occurs; therefore, when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, when uplink RLF occurs on the primary carrier of the UE in the prior art, the communication of the user is interrupted, resulting in a high communication interruption rate and a poor user experience.

### Embodiment 8

This embodiment provides a method for processing RLF to reduce the communication interruption rate of a user.

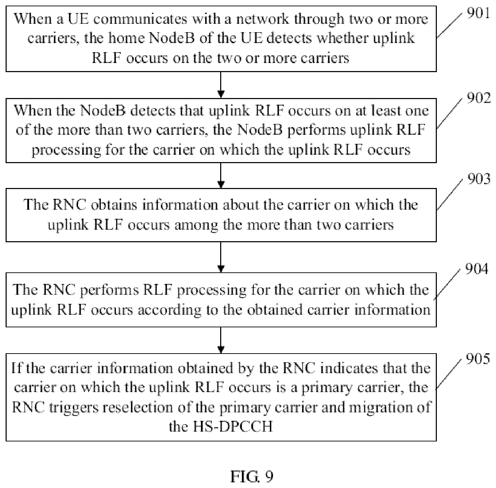

As shown in FIG. 9, the method for processing RLF includes the following steps.

901. When a UE communicates with a network through two or more carriers, the home NodeB of the UE detects whether uplink RLF occurs on the two or more carriers.

In this embodiment, the physical layer of the NodeB may detect whether uplink RLF occurs on the two or more carriers by detecting the uplink DPCCHs of the carriers. Specifically, the NodeB receives information from the uplink DPCCH of each carrier; if the NodeB successively receives N_OUTSYNC_IND pieces of failure indications from the uplink DPCCH of a carrier, the NodeB determines that there is a carrier on which uplink RLF occurs; if the NodeB does not successively receive N_OUTSYNC_IND pieces of failure indications from the uplink DPCCH of the carrier, the UE determines that there is a carrier on which no uplink RLF occurs.

902. When the NodeB detects that uplink RLF occurs on at least one of the two or more carriers, the NodeB may perform uplink RLF processing for the carrier on which the uplink RLF occurs in the following ways.
1. The NodeB sends a message to the RNC, where the message carries information about the carrier and/or cell on which RLF occurs. In this embodiment, the message carrying information about the carrier and/or cell on which RLF occurs may be a RADIO LINK FAILURE INDICATION (RADIO LINK FAILURE INDICATION) message.
2. If there is a carrier on which no uplink RLF occurs among the two or more carriers used by the UE, the NodeB considers that the carrier on which uplink RLF occurs is deactivated, and therefore does not send a message to the RNC. Meanwhile, the NodeB stops sending information on the downlink DPCH/F-DPCH of the carrier on which the uplink RLF occurs.

In this embodiment, the two or more carriers used by the UE include one primary carrier and one or more secondary carrier. If the NodeB determines that the carrier on which uplink RLF occurs in step 901 is the primary carrier, the NodeB determines that there is not a carrier on which no uplink RLF occurs among the two or more carriers in step 902. If the NodeB determines that the carrier on which uplink RLF occurs in step 901 is a secondary carrier, the NodeB determines that there is a carrier on which no uplink RLF occurs among the two or more carriers in step 902.

903. The RNC obtains information about the carrier on which uplink RLF occurs among the two or more carriers.

If the NodeB sends a message carrying information about the carrier and/or cell on which RLF occurs to the RNC in step 902, the RNC may receive the message carrying information about the carrier and/or cell on which the RLF occurs and obtain information about the carrier on which the uplink RLF occurs from the message.

If the NodeB does not send a message to the RNC, and stops sending information on the downlink DPCH/F-DPCH of the carrier on which the uplink RLF occurs in step 902, the RNC may detect the downlink DPCHs/F-DPCHs of the two or more carriers used by the UE and obtain information about the carrier on which the uplink RLF occurs according to the detection result. Specifically, within the preset detection time, if the RNC does not detect data transmitted on the downlink DPCH/F-DPCH, the RNC knows that the uplink RLF occurs on the carrier corresponding to the downlink DPCH/F-DPCH.

904. The RNC performs RLF processing for the carrier on which the uplink RLF occurs according to the carrier information obtained in step 903.

Specifically, the RNC may determine whether uplink RLF occurs on all carriers used by the UE according to the preceding carrier information; if the uplink RLF does not occur on all carriers used by the UE, the RNC removes the uplink radio link of the carrier on which the uplink RLF occurs and updates the active set, or ignores the carrier on which the uplink RLF occurs; if the uplink RLF occurs on all carriers used by the UE, the RNC performs call drop processing for the UE such as reestablishing an RRC connection.

Optionally, the method for processing RLF may include the following step.

905. If the carrier information obtained by the RNC in step 903 indicates that the carrier on which uplink RLF occurs is the primary carrier, the RNC triggers reselection of the primary carrier and migration of a high speed dedicated physical control channel (HS-DPCCH).

With the foregoing RLF processing method, when uplink RLF occurs on a carrier used by the UE, the NodeB may send a message to the RNC, where the message carries information about the carrier and/or cell on which RLF occurs, so that the RNC may perform uplink RLF processing for only the carrier on which uplink RLF occurs; when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, when uplink RLF occurs on the primary carrier of the UE in the prior art, the communication of the user is interrupted, resulting in a high communication interruption rate and a poor user experience. According to the technical solution provided in this embodiment, when there is a carrier on which no uplink RLF occurs, the NodeB can stop sending information on the downlink DPCH/F-DPCH of the carrier on which uplink RLF occurs, without notifying the RNC to perform uplink RLF processing for the carrier on which the uplink RLF occurs, therefore saving network resources.

### Embodiment 9

This embodiment provides a NodeB to reduce the communication interruption rate of a user.

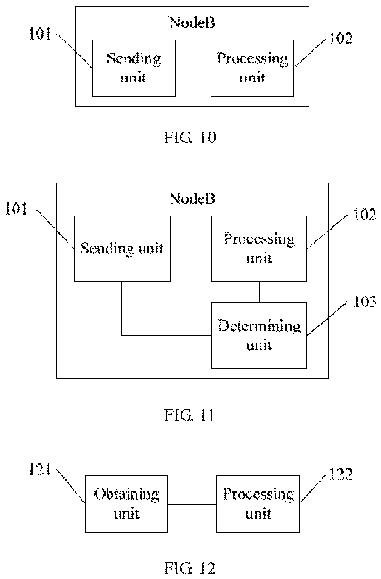

As shown in FIG. 10, the NodeB includes a sending unit 101 that is configured to, when a UE communicates with a network through two or more carriers, if uplink RLF occurs on at least one of the two or more carriers, send a message to an RNC, where the message carries information about the carrier and/or a cell on which RLF occurs and instructs the RNC to perform uplink RLF processing for the carrier on which the uplink RLF occurs. Alternatively, or in addition, a processing unit 102 can be configured to stop sending information on a downlink DPCH of the carrier on which uplink RLF occurs when the UE communicates with the network through the two or more carriers, if uplink RLF occurs on at least one of the two or more carriers and there is a carrier on which no uplink RLF occurs among the two or more carriers.

Further, as shown in FIG. 11, the NodeB may further include a determining unit 103 that is configured to, when the carrier on which uplink RLF occurs is a secondary carrier, determine that there is a carrier on which no uplink RLF occurs among the two or more carriers, and instruct the processing unit 102 to stop sending information on the downlink DPCH of the carrier on which the uplink RLF occurs. When the carrier on which uplink RLF occurs is a primary carrier, the determining unit is configured to determine that there is not a carrier on which no uplink RLF occurs among the two or more carriers, and to instruct the sending unit 101 to send a message carrying information about the carrier and/or cell on which the RLF occurs to the RNC.

For the specific implementation of the NodeB provided in this embodiment, refer to the method for processing RLF provided in the eighth embodiment.

In this embodiment, when uplink RLF occurs on a carrier used by the UE, the NodeB may send a message carrying information about the carrier and/or cell on which RLF occurs to the RNC, so that the RNC may perform uplink RLF processing for only the carrier on which uplink RLF occurs; when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, the prior art considers only uplink RLF of the primary carrier, and when uplink RLF occurs on the primary carrier of the UE, the communication of the user is interrupted, resulting in a high communication interruption rate and a poor user experience. According to the technical solution provided in this embodiment, when there is a carrier on which no uplink RLF occurs, the NodeB can stop sending information on the downlink DPCH of the carrier on which uplink RLF occurs, without notifying the RNC to perform uplink RLF processing for the carrier on which the uplink RLF occurs, therefore saving network resources.

### Embodiment 10

This embodiment provides an RNC to reduce the communication interruption rate of a user.

As shown in FIG. 12, the RNC includes an obtaining unit 121 that is configured to, when a UE communicates with a network through two or more carriers, obtain information about a carrier where uplink RLF occurs among the two or more carriersA processing unit 122 is configured to perform uplink RLF processing for the carrier on which uplink RLF occurs according to the carrier information obtained by the obtaining unit 121.

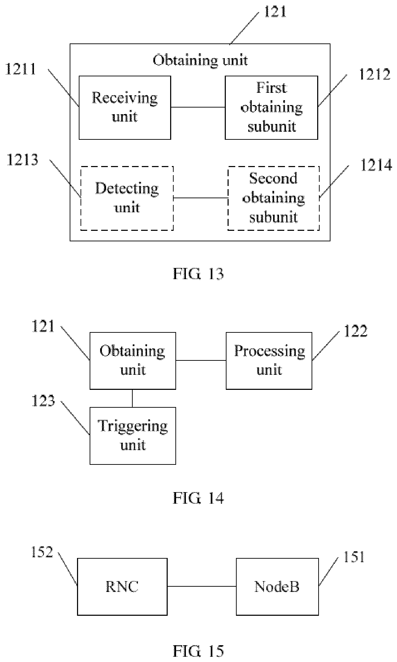

Further, as shown in FIG. 13, the obtaining unit 121 may include a receiving unit 1211 that is configured to receive a message sent by a NodeB, where the message carries information about the carrier and/or cell on which RLF occurs, A first obtaining subunit 1212 is configured to obtain information about the carrier on which uplink RLF occurs from the message received by the receiving unit 1211, and/or a detecting unit 1213 is configured to detect the downlink DPCHs of the two or more carriers, and a second obtaining subunit 1214 is configured to obtain information about the carrier on which uplink RLF occurs according to the detection result of the detecting unit 1213.

Further, as shown in FIG. 14, the RNC may further include a triggering unit 123 that is configured to trigger reselection of the primary carrier and migration of the HS-DPCCH when the carrier on which uplink RLF occurs is the primary carrier.

For the specific implementation of the RNC provided in this embodiment, refer to the method for processing RLF provided in the eighth embodiment.

With the foregoing RNC, uplink RLF processing is performed for only the carrier on which uplink RLF occurs; therefore, when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, the prior art considers only the RLF of the primary carrier, and when uplink RLF occurs on the primary carrier of the UE, the communication of the user will be interrupted, resulting in a high communication interruption rate and a poor user experience.

### Embodiment 11

This embodiment provides a system for processing RLF to reduce the communication interruption rate of a user.

As shown in FIG. 15, the RLF processing system includes a NodeB 151 and an RNC 152.

The NodeB 151 is configured to, when a UE communicates with a network through two or more carriers, if uplink RLF occurs on at least one of the two or more carriers, send a message to the RNC 152, where the message carries information about the carrier and/or a cell on which RLF occurs, and/or when there is a carrier on which no uplink RLF occurs among the two or more carriers, stop sending information on a downlink DPCH of the carrier on which uplink RLF occurs.

The RNC 152 is configured to receive the message carrying information about the carrier and/or cell on which RLF occurs sent by the NodeB 151, and obtain information about the carrier on which the uplink RLF occurs from the message, or detect downlink DPCHs of the two or more carriers, obtain information about the carrier on which the uplink RLF occurs according to a detection result, and perform uplink RLF processing for the carrier on which the uplink RLF occurs according to the obtained carrier information.

With the foregoing RLF processing system, when uplink RLF occurs on a carrier used by the UE, the NodeB may send a message carrying information about the carrier and/or cell on which RLF occurs to the RNC, so that the RNC may perform uplink RLF processing for only the carrier on which uplink RLF occurs; when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, the prior art considers only uplink RLF of the primary carrier, and when uplink RLF occurs on the primary carrier of the UE, the communication of the user will be interrupted, resulting in a high communication interruption rate and a poor user experience. According to the technical solution provided in this embodiment, when there is a carrier on which no uplink RLF occurs exists, the NodeB can stop sending information on the downlink DPCH of the carrier on which uplink RLF occurs, without notifying the RNC to perform uplink RLF processing for the carrier on which the uplink RLF occurs, therefore saving network resources.

### Embodiment 12

This embodiment provides a method for processing RLF to reduce the communication interruption rate of a user.

In this embodiment, a UE communicates with a network through two or more carriers, where the two or more carriers include a primary carrier and at least one secondary carrier.

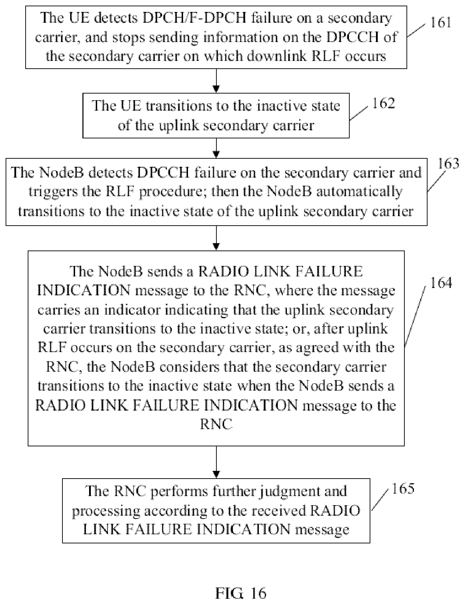

As shown in FIG. 16, the method for processing RLF includes the following steps.

161. The UE detects downlink RLF by monitoring DPCH/F-DPCH on a secondary carrier, and stops sending information on the uplink dedicated physical control channel (DPCCH) of the secondary carrier on which the downlink RLF occurs.

162. The UE changes the state of the uplink secondary carrier to an inactive state, and directly discards unacknowledged data or data that is retransmitted upon acknowledgement of transmission failure, or sends information on the primary carrier instead.

163. The NodeB detects DPCCH failure on the secondary carrier and triggers the RLF procedure. Then the NodeB automatically changes the state of the uplink secondary carrier to an inactive state. When the UE and NodeB both change the state of the uplink carrier to an inactive state, it indicates that the state of the uplink carrier changes to the inactive state.

164. The NodeB sends a RADIO LINK FAILURE INDICATION (RADIO LINK FAILURE INDICATION) message to the RNC, where the message carries an indication indicating that the state of the uplink secondary carrier changes to the inactive state; or, after uplink RLF occurs on the secondary carrier, as agreed with the RNC, the NodeB considers that the state of the secondary carrier changes to the inactive state when the NodeB sends a RADIO LINK FAILURE INDICATION message to the RNC.

165. The RNC performs further judgment and processing according to the received RADIO LINK FAILURE INDICATION message. If the RNC determines that the state of the uplink carrier changes to the inactive state according to the RADIO LINK FAILURE INDICATION message, the RNC forwards the deactivation information of the secondary carrier to other NodeBs in the active set; or, if the RNC determines that radio link reconfiguration is required on an uplink single carrier according to the RADIO LINK FAILURE INDICATION message, the RNC removes the radio link from the active set of the secondary carrier.

With the foregoing RLF processing method, when downlink RLF occurs on a secondary carrier used by the UE, the UE sets the state of the uplink secondary carrier to an inactive state and stops sending information on the DPCCH, therefore causing the NodeB to detect DPCCH failure on the secondary carrier and triggering the RLF procedure. Then the NodeB automatically changes to the state of the secondary carrier to an inactive state. By reporting indication information to the RNC or according to the agreement between the NodeB and the RNC, the NodeB tells the RNC that the state of the secondary carrier changes to the inactive state. Therefore, the RNC does not need to remove the secondary carrier on which the downlink RLF occurs. When the secondary carrier needs to be used at the next time, it is only necessary to send an Activate command, therefore reducing the delay in secondary carrier reestablishment and reducing the communication interruption rate of the user.

The method, apparatus, and system for processing RLF provided in the embodiments of the present invention are applicable to a multi-carrier system, such as a multi-carrier wideband code division multiple access (WCDMA) system.

It is understandable to those skilled in the art that all or part of the steps of the foregoing embodiments may be implemented by hardware instructed by a computer program. The program may be stored in a computer-readable storage medium. When being executed, the program performs the procedures covered in the foregoing embodiments. The storage medium may be a magnetic disk, a compact disk-read only memory (CD-ROM), a read-only memory (read-only memory, ROM) or a random access memory (random access memory, RAM).

Although the invention has been described through some exemplary embodiments, the invention is not limited to such embodiments. It is apparent that those skilled in the art can make various modifications and substitutions to the invention without departing from the protection scope of the invention. The invention is intended to cover the modifications and substitutions provided that they fall within the scope of protection defined by the claims or their equivalents.

## Claims

1. A method for processing radio link failure, RLF, comprising:
determining (901), by a base station, whether an uplink RLF occurs on a primary carrier or at least one secondary carrier when the base station communicates with a user equipment, UE, through the primary carrier and the at least one secondary carrier;
**characterized in that** the method comprises:
stopping (902), by the base station, sending information on a downlink dedicated physical channel or fractional dedicated physical channel, DPCH/F-DPCH, of a secondary carrier of the at least one secondary carrier if the uplink RLF occurs on the secondary carrier;
keeping, by the base station, communication between the base station and the UE through one or more other carriers on where the uplink RLF does not occur; and
setting (902), by the base station, a state of the secondary carrier to a deactivated state after the base station stops sending the information on the downlink DPCH/F-DPCH.

2. The method of claim 1, further comprising:
sending (902), by the base station, a message to a radio network controller, RNC, wherein the message carries information about a carrier and/or cell on where the uplink RLF occurs if the uplink RLF occurs on the carrier on where the uplink RLF occurs.

3. The method of claim 2, wherein the message carrying the information about the carrier and/or cell on where the uplink RLF occurs is a RADIO LINK FAILURE INDICATION message.

4. The method of claim 1, further comprising:
receiving, by the base station, information from an uplink dedicated physical control channel, DPCCH, of each carrier of the primary carrier or the at least one secondary carrier; and
determining, by the base station, that the uplink RLF occurs on a carrier which is one of the primary carrier or the at least one secondary carrier if successively receiving N_OUTSYNC_IND pieces of failure indications from the uplink DPCCH of the carrier.

5. The method of claim 1, further comprising:
receiving, by the base station, information from an uplink dedicated physical control channel, DPCCH, of each carrier of the primary carrier or the at least one secondary carrier; and
determining, by the base station, that the uplink RLF does not occur on a carrier which is one of the primary carrier or the at least one secondary carrier if not successively receiving N_OUTSYNC_IND pieces of failure indications from the uplink DPCCH of the carrier.

6. A base station, comprising:
a determining unit (103) configured to determine whether an uplink RLF occurs on a primary carrier or at least one secondary carrier when the base station communicates with a user equipment, UE, through the primary carrier and the at least one secondary carrier;
**characterized in that** the base station comprises:
a processing unit (102) configured to stop sending information on a downlink dedicated physical channel or fractional dedicated physical channel, DPCH/F-DPCH, of a secondary carrier of the at least one secondary carrier if the uplink RLF occurs on the secondary carrier; keep communication between the base station and the UE through one or more other carriers on where the uplink RLF does not occur; and set a state of the secondary carrier to a deactivated state after the base station stops sending the information on the downlink DPCH/F-DPCH.

7. The base station of claim 6, further comprising:
a sending unit (101), configured to send a message to a radio network controller, RNC, wherein the message carries information about a carrier and/or cell on where the uplink RLF occurs if the uplink RLF occurs on the carrier on where the uplink RLF occurs.

8. The base station of claim 7, wherein the message comprises a cell update message or a measurement report message.

9. The base station of claim 6, further comprising:
a means for receiving information from an uplink dedicated physical control channel, DPCCH, of each carrier of the primary carrier or the at least one secondary carrier ; and
wherein the determining unit (103) is further configured to determine that the uplink RLF occurs on a carrier which is one of the primary carrier or the at least one secondary carrier if successively receiving N_OUTSYNC_IND pieces of failure indications from the uplink DPCCH of the carrier.

10. The base station of claim 6, further comprising:
a means for receiving information from an uplink dedicated physical control channel, DPCCH, of each carrier of the primary carrier or the at least one secondary carrier; and
wherein the determining unit (103) is further configured to determine that the uplink RLF does not occur on a carrier which is one of the primary carrier or the at least one secondary carrier if not successively receiving N_OUTSYNC_IND pieces of failure indications from the uplink DPCCH of the carrier.

11. A computer readable medium comprising a computer program stored in a non-transitory medium that, when executed by a computer unit, will cause the computer unit to perform the steps of a base station according to any one of claims 1 to 5.

## Patentansprüche

1. Verfahren zum Verarbeiten eines Funkverbindungsfehlers, RLF, das die folgenden Schritte umfasst:
Feststellen (901) durch eine Basisstation, ob ein Uplink-RLF auf einem primären Träger oder mindestens einem sekundären Träger auftritt, wenn die Basisstation mit einer Benutzereinrichtung, UE, durch den primären Träger und den mindestens einen sekundären Träger kommuniziert;
**dadurch gekennzeichnet, dass** das Verfahren aufweist:
Stoppen (902) durch die Basisstation des Sendens von Informationen auf einem dedizierten physikalischen Downlink-Kanal oder fraktionellen dedizierten physikalischen Kanal, DPCH/F-DPCH, eines sekundären Trägers des mindestens einen sekundären Trägers, wenn der Uplink-RLF auf dem sekundären Träger auftritt; Aufrechterhalten durch die Basisstation der Kommunikation zwischen der Basisstation und der UE durch einen oder mehrere Träger, auf denen der Uplink-RLF nicht auftritt; und
Einstellen (902) durch die Basisstation eines Zustands des sekundären Trägers auf einen deaktivierten Zustand, nachdem die Basisstation das Senden der Informationen auf dem Downlink-DPCH/F-DPCH stoppt.

2. Verfahren nach Anspruch 1, das ferner aufweist:
Senden (902) durch die Basisstation einer Nachricht an einen "Radio Network Controller", RNC, wobei die Nachricht Informationen über einen Träger und/oder eine Zelle befördert, auf denen der Uplink-RLF auftritt, wenn der Uplink-RLF auf dem Träger auftritt, auf dem der Uplink-RLF auftritt.

3. Verfahren nach Anspruch 2, wobei die Nachricht, die die Informationen über den Träger und/oder die Zelle befördert, auf denen der Uplink-RLF auftritt, eine "RADIO LINK FAILURE INDICATION"-Nachricht ist.

4. Verfahren nach Anspruch 1, das ferner aufweist:
Empfangen durch die Basisstation von Informationen von einem dedizierten physikalischen Uplink-Steuerkanal, DPCCH, jedes Trägers des primären Trägers oder des mindestens einen sekundären Trägers; und
Feststellen durch die Basisstation, dass der Uplink-RLF auf einem Träger auftritt, der einer des primären Trägers oder des mindestens einen sekundären Trägers ist, wenn aufeinanderfolgend N_OUTSYNC_IND-Stücke von Fehleranzeigen vom Uplink-DPCCH des Trägers empfangen werden.

5. Verfahren nach Anspruch 1, das ferner aufweist:
Empfangen durch die Basisstation von Informationen von einem dedizierten physikalischen Uplink-Steuerkanal, DPCCH, jedes Trägers des primären Trägers oder des mindestens einen sekundären Trägers; und
Feststellen durch die Basisstation, dass der Uplink-RLF nicht auf einem Träger auftritt, der einer des primären Trägers oder des mindestens einen sekundären Trägers ist, wenn nicht aufeinanderfolgend N_OUTSYNC_IND-Stücke von Fehleranzeigen vom Uplink-DPCCH des Trägers empfangen werden.

6. Basisstation, die Folgendes umfasst:
eine Feststelleinheit (103), die konfiguriert ist festzustellen, ob ein Uplink-RLF auf einem primären Träger oder mindestens einem sekundären Träger auftritt, wenn die Basisstation mit einer Benutzereinrichtung, UE, durch den primären Träger und den mindestens einen sekundären Träger kommuniziert;
**dadurch gekennzeichnet, dass** die Basisstation aufweist:
eine Verarbeitungseinheit (102), die konfiguriert ist, das Senden von Informationen auf einem dedizierten physikalischen Downlink-Kanal oder fraktionellen dedizierten physikalischen Kanal, DPCH/F-DPCH, eines sekundären Trägers des mindestens einen sekundären Trägers zu stoppen, wenn der Uplink-RLF auf dem sekundären Träger auftritt; eine Kommunikation zwischen der Basisstation und der UE durch einen oder mehrere Träger aufrechtzuerhalten, auf denen der Uplink-RLF nicht auftritt; und einen Zustand des sekundären Trägers auf einen deaktivierten Zustand einzustellen, nachdem die Basisstation das Senden der Informationen auf dem Downlink-DPCH/F-DPCH stoppt.

7. Basisstation nach Anspruch 6, die ferner aufweist:
eine Sendeeinheit (101), die konfiguriert ist, eine Nachricht an einen "Radio Network Controller", RNC, zu senden, wobei die Nachricht Informationen über einen Träger und/oder eine Zelle befördert, auf denen der Uplink-RLF auftritt, wenn der Uplink-RLF auf dem Träger auftritt, auf dem der Uplink-RLF auftritt.

8. Basisstation nach Anspruch 7, wobei die Nachricht eine Zelleaktualisierungsnachricht oder eine Messprotokollnachricht aufweist.

9. Basisstation nach Anspruch 6, das ferner aufweist:
ein Mittel zum Empfangen von Informationen von einem dedizierten physikalischen Uplink-Steuerkanal, DPCCH, jedes Trägers des primären Trägers oder des mindestens einen sekundären Trägers; und
wobei die Feststelleinheit (103) ferner konfiguriert ist festzustellen, dass der Uplink-RLF auf einem Träger auftritt, der einer des primären Trägers oder des mindestens einen sekundären Trägers ist, wenn aufeinanderfolgend N_OUTSYNC_IND-Stücke von Fehleranzeigen vom Uplink-DPCCH des Trägers empfangen werden.

10. Basisstation nach Anspruch 6, das ferner aufweist:
ein Mittel zum Empfangen von Informationen von einem dedizierten physikalischen Uplink-Steuerkanal, DPCCH, jedes Trägers des primären Trägers oder des mindestens einen sekundären Trägers; und
wobei die Feststelleinheit (103) ferner konfiguriert ist festzustellen, dass der Uplink-RLF nicht auf einem Träger auftritt, der einer des primären Trägers oder des mindestens einen sekundären Trägers ist, wenn nicht aufeinanderfolgend N_OUTSYNC_IND-Stücke von Fehleranzeigen vom Uplink-DPCCH des Trägers empfangen werden.

11. Computerlesbares Medium, das ein Computerprogramm aufweist, das in einem nicht flüchtigen Medium gespeichert ist, das, wenn es durch eine Computereinheit ausgeführt wird, die Computereinheit veranlassen wird, die Schritte einer Basisstation nach einem der Ansprüche 1 bis 5 auszuführen.

## Revendications

1. Procédé permettant de traiter une défaillance de liaison radio, RLF, comprenant les étapes suivantes :
déterminer (901), par une station de base, si un RLF de liaison montante a lieu sur une porteuse primaire ou au moins une porteuse secondaire lorsque la station de base communique avec un équipement utilisateur, UE, par l'intermédiaire de la porteuse primaire et de ladite porteuse secondaire ;
**caractérisé en ce que** le procédé comprend :
arrêter (902), par la station de base, d'envoyer des informations sur un canal physique dédié de liaison descendante ou un canal physique dédié fractionnel, DPCH/F-DPCH, d'une porteuse secondaire de ladite porteuse secondaire si le RLF de liaison montante a lieu sur la porteuse secondaire ;
conserver, par la station de base, une communication entre la station de base et l'UE par l'intermédiaire d'une ou plusieurs autres porteuses sur lesquelles le RLF de liaison montante n'a pas lieu ; et
fixer (902), par la station de base, un état de la porteuse secondaire à un état désactivé après que la station de base a arrêté d'envoyer les informations sur le DPCH/F-DPCH de liaison descendante.

2. Procédé selon la revendication 1, comprenant en outre :
envoyer (902), par la station de base, un message à un contrôleur de réseau radio, RNC, le message contenant des informations concernant une porteuse et/ou une cellule sur lesquelles le RLF de liaison montante a lieu si le RLF de liaison montante a lieu sur la porteuse sur laquelle le RLF de liaison montante a lieu.

3. Procédé selon la revendication 2, dans lequel le message contenant les informations concernant la porteuse et/ou la cellule sur lesquelles le RLF de liaison montante a lieu est un message d'Indication de défaillance de liaison radio.

4. Procédé selon la revendication 1, comprenant en outre :
recevoir, par la station de base, des informations à partir d'un canal de contrôle physique dédié, DPCCH, de liaison montante de chaque porteuse de la porteuse primaire ou de ladite porteuse secondaire ; et
déterminer, par la station de base, que le RLF de liaison montante a lieu sur une porteuse qui est la porteuse primaire ou ladite porteuse secondaire en cas de réception réussie d'éléments N_OUTSYNC_IND d'indications de défaillance à partir du DPCCH de liaison montante de la porteuse.

5. Procédé selon la revendication 1, comprenant en outre :
recevoir, par la station de base, des informations à partir d'un canal de contrôle physique dédié, DPCCH, de liaison montante de chaque porteuse de la porteuse primaire ou de ladite porteuse secondaire ; et
déterminer, par la station de base, que le RLF de liaison montante n'a pas lieu sur une porteuse qui est la porteuse primaire ou ladite porteuse secondaire en cas de réception non réussie d'éléments N_OUTSYNC_IND d'indications de défaillance à partir du DPCCH de liaison montante de la porteuse.

6. Station de base, comprenant :
une unité de détermination (103) configurée pour déterminer si un RLF de liaison montante a lieu sur une porteuse primaire ou au moins une porteuse secondaire lorsque la station de base communique avec un équipement utilisateur, UE, par l'intermédiaire de la porteuse primaire et de ladite porteuse secondaire,
**caractérisé en ce que** la station de base comprend :
une unité de traitement (102) configurée pour arrêter d'envoyer des informations sur un canal physique dédié de liaison descendante ou un canal physique dédié fractionnel, DPCH/F-DPCH, d'une porteuse secondaire de ladite porteuse secondaire si le RLF de liaison montante a lieu sur la porteuse secondaire ; conserver une communication entre la station de base et l'UE par l'intermédiaire d'une ou plusieurs autres porteuses sur lesquelles le RLF de liaison montante n'a pas lieu ; et fixer un état de la porteuse secondaire à un état désactivé après que la station de base a arrêté d'envoyer les informations sur le DPCH/F-DPCH de liaison descendante.

7. Station de base selon la revendication 6, comprenant en outre :
une unité d'envoi (101), configurée pour envoyer un message à un contrôleur de réseau radio, RNC, le message contenant des informations concernant une porteuse et/ou une cellule sur lesquelles le RLF de liaison montante a lieu si le RLF de liaison montante a lieu sur la porteuse sur laquelle le RLF de liaison montante a lieu.

8. Station de base selon la revendication 7, dans laquelle le message comprend un message de mise à jour de cellule ou un message de rapport de mesure.

9. Station de base selon la revendication 6, comprenant en outre :
un moyen destiné à recevoir des informations à partir d'un canal de contrôle physique dédié, DPCCH, de liaison montante de chaque porteuse de la porteuse primaire ou de ladite porteuse secondaire ; et
l'unité de détermination (103) étant en outre configurée pour déterminer que le RLF de liaison montante a lieu sur une porteuse qui est la porteuse primaire ou ladite porteuse secondaire en cas de réception réussie d'éléments N_OUTSYNC_IND d'indications de défaillance à partir du DPCCH de liaison montante de la porteuse.

10. Station de base selon la revendication 6, comprenant en outre :
un moyen destiné à recevoir des informations à partir d'un canal de contrôle physique dédié, DPCCH, de liaison montante de chaque porteuse de la porteuse primaire ou de ladite porteuse secondaire ; et
l'unité de détermination (103) étant en outre configurée pour déterminer que le RLF de liaison montante n'a pas lieu sur une porteuse qui est la porteuse primaire ou ladite porteuse secondaire en cas de réception non réussie d'éléments N_OUTSYNC_IND d'indications de défaillance à partir du DPCCH de liaison montante de la porteuse.

11. Support lisible par ordinateur comprenant un programme d'ordinateur stocké dans un support non transitoire qui, lorsqu'il est exécuté par une unité informatique, amène l'unité informatique à mettre en oeuvre les étapes d'une station de base selon l'une quelconque des revendications 1 à 5.
